# FASCICULE DE BREVET EUROPEEN

(11) **EP 3 924 806 B1**
(45) Date de publication et mention de la délivrance du brevet: **28.01.2026**
(21) Numéro de dépôt: 20706792.7
(22) Date de dépôt: 31.01.2020
(51) Int. Cl.: G06F 3/04886, G06F 3/04883, G06F 3/0482, G07F 7/10, G06F 3/16, G07F 9/02, G09B 21/00, G06Q 20/40, G07F 19/00

(54) **PROCÉDÉ DE COMMANDE D'UN ÉQUIPEMENT INFORMATIQUE POUR SAISIR UN CODE PERSONNEL**
VERFAHREN ZUR STEUERUNG EINER RECHNERVORRICHTUNG ZUR EINGABE EINES PERSÖNLICHEN CODES
METHOD FOR CONTROLLING A COMPUTER DEVICE FOR ENTERING A PERSONAL CODE

(30) Priorité: 12.02.2019 FR 1901378
(43) Date de publication de la demande: 22.12.2021
(73) Titulaire: Orange, 92130 Issy-les-Moulineaux (FR)
(72) Inventeur: LELEU, Xavier, 92326 CHÂTILLON CEDEX (FR); HAFFEZ, Zougane, 92326 CHÂTILLON CEDEX (FR)
(74) Mandataire: Regimbeau
(86) Numéro de dépôt international: PCT/FR2020/050160
(87) Numéro de publication internationale: WO 2020/165521

(56) Documents cités:
- WO-A1-2018/010823
- US-A- 6 061 666
- US-A1- 2017 269 828
- ELINA JOKISUU ET AL.: "Touchscreen Accessibility in Self-Service Terminals", THE JOURNAL ON TECHNOLOGY AND PERSONS WITH DISABILITIES, vol. 4, 21 March 2016 (2016-03-21), ISSN 2330-4219, pages 114 - 133, XP055844778, [retrieved on 20210927]

## Description

### DOMAINE TECHNIQUE GENERAL

La présente invention concerne le domaine de la saisie d'un code personnel via un équipement informatique pour accéder à un service.

Plus précisément, elle concerne un procédé de commande d'un tel équipement dans un mode de lecture d'écran.

### ETAT DE L'ART

On connait aujourd'hui des logiciels de lecture d'écran destinés aux personnes aveugles ou fortement malvoyantes ou bien encore illettrées. On citera en particulier VoiceOver, développé par la société Apple et intégré aux systèmes d'exploitation iOS et MacOSX.

Ces logiciels lisent par synthèse vocale ce qui est affiché sur l'écran d'un équipement informatique tel qu'un ordinateur ou d'un terminal mobile et permettent d'interagir avec ceux-ci au moyen d'un certain nombre de commandes prédéterminées.

On comprend, ainsi que lorsqu'un tel logiciel est activé, les commandes « ordinaires » ne sont plus forcément actives. On entend par « commande ordinaire » une gestuelle classique d'interaction de l'utilisateur avec son écran. Par exemple, sur un terminal mobile à interface tactile de type smartphone, normalement un « toucher » d'un objet le sélectionne (par exemple un toucher de l'icône d'une application la lance), mais lorsque le logiciel de lecture d'écran est activé, le même toucher simple d'un objet fait entendre à l'utilisateur sa description (par exemple le nom de l'application dont l'icone est touchée), et un toucher double ou long entraîne sa validation.

Ces mécanismes permettent ainsi techniquement à un utilisateur de piloter totalement son équipement sans utiliser l'écran.

On constate néanmoins une difficulté lors de l'utilisation de claviers virtuels, en particulier pour la saisie d'un code.

Il est en effet très connu de proposer des claviers contenant des éléments disposés aléatoirement (souvent avec en plus des éléments factices tels que des cases vides), typiquement un clavier 3x4 avec les chiffres de 0 à 9 et deux cases vides, pour saisir un code permettant l'accès à un service sensible, par exemple un compte en banque. Le but d'un tel clavier virtuel est de prévenir des attaques par enregistreur de frappe (keylogger/mouselogger en anglais) : si l'utilisateur saisissait le code avec son clavier normal, un enregistreur de frappe permettrait de connaître la séquence de touches pressées et d'en déduire le code. Dès lors qu'un clavier virtuel est utilisé, l'enregistreur de frappe ne peut que connaitre l'emplacement des éléments sélectionnés, il faudrait une capture d'écran pour retrouver le code.

Si de tels claviers virtuels apportent satisfaction du point de vue de la sécurité informatique, ils s'avèrent laborieux d'utilisation avec un logiciel de lecture d'écran.

En effet, si leur utilisation est possible sous lecteur d'écran à condition que l'utilisateur ait pris quelques précautions (utiliser un casque ou des oreillettes pour éviter que le code saisi ne soit entendu de tous, et éventuellement activer un mode de sécurité dans lequel l'écran est éteint pour éviter les regards de tiers qui eux ne sont pas malvoyants), le désordre des éléments présentés contraint l'utilisateur à tester les éléments les uns après les autres (i.e. entendre leur description) pour découvrir leur position et celle des éventuels éléments factices. Après sélection d'un chiffre du code à saisir par la gestuelle adaptée (par exemple double toucher), il n'a pas d'autre choix que de recommencer sauf s'il a réussi à mémoriser, dans le meilleur des cas, ceux déjà testés pour savoir si le prochain chiffre à fournir s'y trouve.

Il y a de fortes chances que l'utilisateur finisse par se perdre dans son code (il ne sait pas nécessairement où il en est dans la saisie), et s'il fait une erreur la plupart des claviers virtuels modifient alors l'agencement de leurs éléments pour une nouvelle saisie, ce qui oblige ici à recommencer toute la démarche mentale.

Le document "Touchscreen Accessibility in Self-Service Terminals" (E. Jokisuu et coll., Journal on Technology and Persons with Disabilities 4: 114-132) divulgue un procédé visant à rendre les écrans tactiles des terminaux libre-service, tels que les guichets automatiques, accessibles aux personnes malvoyantes. Parmi les solutions testées, il décrit un mode de saisie appelé « Slider », où un utilisateur fait glisser son doigt horizontalement le long du bas de l'écran pour entendre successivement chaque option d'un menu ou chaque caractère alphabétique d'un clavier virtuel. Un geste différent, en l'occurrence un double-tape, est utilisé pour sélectionner l'élément courant. Cette méthode est notamment appliquée à la saisie de texte sur un clavier virtuel affichant les lettres dans un agencement fixe et standard.

Il serait par conséquent souhaitable de disposer d'une nouvelle solution d'utilisation d'un clavier virtuel avec un logiciel de lecture d'écran qui soit plus simple et plus ergonomique, sans pour autant diminuer la sécurité.

### PRESENTATION DE L'INVENTION

La présente invention se rapporte ainsi selon un premier aspect à un procédé de commande d'un équipement informatique tel que défini dans la revendication 1.

La liste d'éléments possibles, manipulable avec seulement deux types de geste, permet d'utiliser le clavier virtuel en mode de lecture d'écran, sans la difficulté de trouver la position souvent aléatoire des éléments. Ainsi, la saisie d'un code est fortement facilitée pour les personnes malvoyantes ou illettrées.

Une disposition aléatoire des éléments du clavier virtuel augmente la sécurité en perturbant les keyloggers, sans avoir aucun impact négatif sur l'ergonomie du présent procédé puisque la liste d'éléments possibles reste la même indépendamment de la position des éléments du clavier virtuel.

Selon d'autres caractéristiques avantageuses et non-limitatives :
- ladite interface graphique est un écran tactile, lesdits premier et deuxième types étant des gestes de toucher (il s'agit d'un type d'interface très adaptée aux claviers virtuels et aux gestes variés, facilitant encore la saisie en mode de lecture d'écran) ;
- le premier type de geste est un toucher glissé et le deuxième type de geste est un toucher double (de tels gestes sont particulièrement intuitifs) ;
- l'équipement informatique comprenant en outre une sortie audio, l'étape (b) comprend la description vocale sur la sortie audio d'une action mise en œuvre suite à la détection d'un premier ou deuxième type de geste (la description audio permet à un utilisateur le cas échéant complètement non-voyant de savoir exactement ce qu'il se passe à l'écran et de mettre en œuvre sans difficulté le présent procédé) ;
- l'étape (a) comprend la description vocale sur la sortie audio de ladite liste d'éléments possibles dudit clavier virtuel (le fait de décrire à l'avance la liste d'éléments possibles permet à l'utilisateur d'anticiper la position des éléments constitutifs de son code et de gagner du temps. Il n'a ainsi rien à chercher) ;
- le clavier virtuel comprend au moins un élément ne pouvant pas faire partie du code, ladite liste d'éléments possibles dudit clavier virtuel comprenant tous les éléments du clavier virtuel pouvant faire partie du code (similairement, la présence d'éléments factices augmente la sécurité en perturbant les keyloggers, sans avoir aucun impact négatif sur l'ergonomie du présent procédé puisque la liste d'éléments possibles ne contient pas de tels éléments factices) ;
- ladite liste d'éléments possibles dudit clavier virtuel comprend en outre un élément d'effacement, dont la validation fait revenir à l'élément précédent de la séquence constituant le code (l'ajout de cet élément d'effacement permet à l'utilisateur de facilement corriger une erreur de saisie tout en restant dans le mode de lecture d'écran) ;
- le procédé comprend en outre, après que chaque élément de la séquence constituant le code a été sélectionné, une étape (c) de soumission du code (cela permet la validation du code et son utilisation effective par exemple pour authentifier l'utilisateur).

Selon un deuxième aspect, l'invention concerne un équipement informatique tel que défini dans la revendication 9.

Selon un troisième et un quatrième aspects, l'invention concerne un produit programme d'ordinateur comprenant des instructions de code pour l'exécution d'un procédé selon le premier aspect de commande d'un équipement informatique, lorsque ledit programme est exécuté par un ordinateur ; et un moyen de stockage lisible par un équipement informatique sur lequel un produit programme d'ordinateur comprend des instructions de code pour l'exécution d'un procédé selon le premier aspect de commande d'un équipement informatique.

### PRESENTATION DES FIGURES

D'autres caractéristiques et avantages de la présente invention apparaîtront à la lecture de la description qui va suivre d'un mode de réalisation particulier. Cette description sera donnée en référence aux figures annexées :
- la figure 1 représente un schéma d'une architecture générale de réseau pour la mise en œuvre de l'invention ;
- la figure 2 représente un exemple de clavier virtuel pour la saisie d'un code ;
- la figure 3 est un organigramme illustrant la mise en œuvre d'un mode de réalisation particulier du procédé proposé.

### DESCRIPTION DETAILLEE

### Architecture

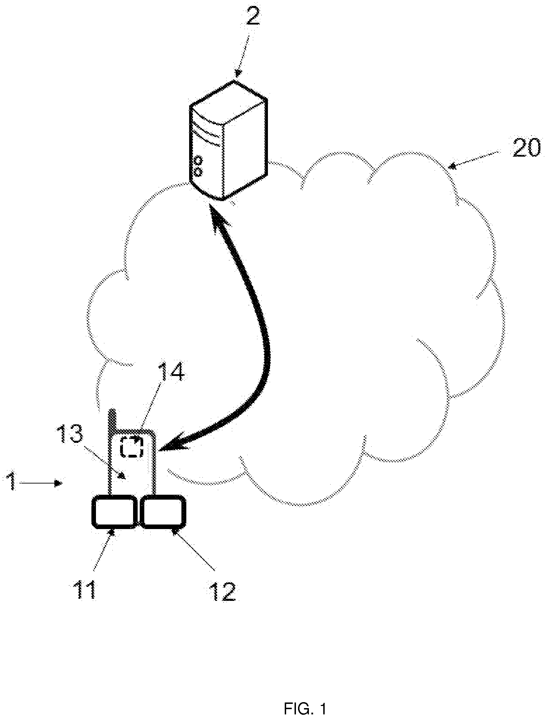

En référence à la **figure 1****,** l'invention propose un procédé de commande d'un équipement informatique 1, visant en particulier à la saisie d'un code, typiquement un code personnel associé à un utilisateur cherchant à accéder à un service, en particulier un service sensible (par exemple la consultation d'un compte bancaire, l'ouverture d'une messagerie, la modification d'informations personnelles ou de réglages de confidentialité, etc.). Ledit procédé est préférentiellement mis en œuvre directement au sein d'une application dédiée audit service, par exemple l'application d'une banque, et à ce titre le service est typiquement mis en œuvre par un serveur distant 2, auquel l'équipement informatique 1 peut être connecté par un réseau 20 tel que le réseau internet.

On comprendra qu'alternativement le service peut tout à fait être mis en œuvre directement par le système d'exploitation dudit équipement informatique 1 (par exemple pour modifier des réglages de confidentialité, qui nécessite la saisie d'un code), et alors aucune connexion à un réseau 20 n'est nécessaire.

Dans la suite de la présente description, on prend l'exemple de la saisie d'un code personnel pour l'accès à un service de type bancaire via une application dédiée, mais on comprendra que la présente invention n'est limitée à aucun contexte et aucune utilisation particulière.

L'équipement informatique 1 peut être de n'importe quel type, en particulier un terminal mobile de type smartphone ou tablette tactile, mais également un ordinateur personnel, une borne publique, etc. Il comprend un module de traitement de données 11 (un processeur), avantageusement un module de stockage de données 12 (une mémoire), et une interface graphique utilisateur 13 (IHM) comprenant par exemple des moyens de saisie et des moyens d'affichage. Dans un mode de réalisation particulier l'interface graphique utilisateur 13 est un écran tactile (qui combine les fonctions de saisie et d'affichage), mais il peut tout à fait s'agir d'un écran ordinaire couplé à un dispositif de pointage tel qu'une souris ou un trackpad, et/ou un clavier.

Avantageusement, le terminal 1 peut en outre comprendre une sortie audio 14, qui peut être aussi bien une sortie physique (haut-parleur intégré, prise casque, etc.) qu'une sortie virtuelle (par exemple une connexion sans-fil, notamment Bluetooth, avec un périphérique audio tel qu'une enceinte connectée).

### Clavier virtuel

Le présent procédé est préférentiellement destiné à être mis en œuvre dans un mode de lecture d'écran (souvent présenté comme un mode « d'accessibilité pour les personnes malvoyantes »), i.e. alors qu'un logiciel de lecture d'écran est activé.

A ce titre, le présent procédé peut permettre de commander l'équipement informatique 1 de façon complémentaire ou alternative à un mode de commande « classique » ou « ordinaire » (voir plus loin), i.e. la mise en œuvre du mode de lecture d'écran peut le cas échéant désactiver ledit mode de commande classique.

De façon générale le logiciel de lecture d'écran peut être intégré dans le système d'exploitation de l'équipement informatique 1. Dans un tel cas, bien que la saisie de code puisse être mise en œuvre dans une application dédiée, cette application peut appeler le logiciel de lecture d'écran de l'OS et/ou mettre en œuvre son propre logiciel de lecture d'écran. Par exemple, le logiciel de lecture d'écran de l'OS peut n'être appelé que pour vocaliser des éléments indiqués par l'application dédiée.

La présence d'une sortie audio 14 est particulièrement adaptée en cas de mise en œuvre d'un logiciel de lecture d'écran, dans la mesure où un tel logiciel émet des messages sonores sur la sortie audio 14.

De façon classique, le procédé commence par une étape (a) de requête de saisie par l'utilisateur d'un code sur l'interface graphique utilisateur 13 par l'intermédiaire d'un clavier virtuel, ledit code étant constitué d'une séquence d'éléments dudit clavier virtuel. Généralement, cette étape (a) requiert à ce titre l'affichage par l'interface graphique 13 du clavier virtuel en vue de la saisie par l'utilisateur du code sur ce clavier virtuel, mais comme l'on verra plus loin, les fonctions d'affichage de l'interface graphique utilisateur 13 peuvent éventuellement être désactivées pour diverses raisons, sans que cela ne change rien au présent procédé.

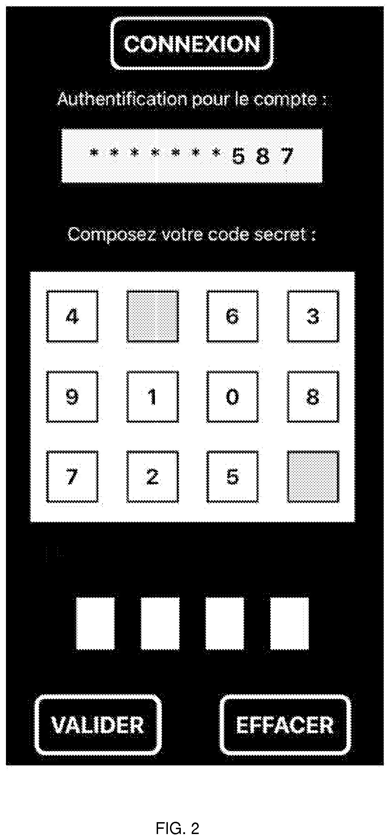

Par clavier virtuel, on entend un objet logiciel permettant à l'utilisateur une saisie en l'absence de clavier physique, comme représenté par exemple par la **figure 2****.** Plus précisément, le clavier virtuel, lorsqu'il est affiché sur l'interface graphique 13, définit un ensemble de touches virtuelles associées chacune à un « élément » du clavier, chaque élément étant généralement un caractère alphanumérique, mais on comprendra que des éléments du clavier virtuel peuvent être des caractères non-alphanumériques (par exemple de la ponctuation), des symboles (par exemple des opérateurs mathématiques), des idéogrammes (caractères asiatiques), d'autres pictogrammes (des émoticônes notamment), ou autres (des éléments purement fonctionnels comme majuscule, ou des éléments « factices », voir plus loin).

Dans un mode de commande classique, l'utilisateur sélectionne un élément du clavier virtuel comme s'il pressait la touche virtuelle correspondante, en touchant (en cas d'interface tactile) la zone associée ou en y déplaçant un pointeur (souris par exemple).

Les terminaux mobiles de type smartphone disposent de claviers virtuels prédéterminés mis en œuvre par l'OS, par exemple un clavier azerty, généralement pour la saisie de texte. Un tel clavier virtuel a vocation à se substituer totalement à un clavier physique.

Dans le cadre du présent procédé, ledit clavier virtuel affiché à l'étape (a) est un clavier virtuel dédié à la saisie du code plutôt que le clavier virtuel de base de l'équipement informatique 1, i.e. un clavier virtuel souvent mis en œuvre par l'application correspondante, et présentant un nombre d'éléments réduits (le but d'un tel clavier est uniquement la saisie du code, et non d'autres usages comme la saisie d'un message). Typiquement, le clavier est alphanumérique, voire seulement numérique (i.e. chiffres de 0 à 9), car souvent ledit code est seulement numérique, par exemple un code à quatre chiffres. Cela n'exclut pas que le clavier virtuel puisse comprendre au moins un élément ne pouvant pas faire partie du code, typiquement un élément factice. Par élément factice, on entend une touche du clavier associée à aucun caractère, en d'autres termes non sélectionnable. Un élément factice est typiquement une case vide, destinée à complexifier un éventuel espionnage du clavier. Dans un mode de réalisation particulier, ledit clavier virtuel n'est composé que d'éléments pouvant faire partie du code et d'élément factices, en particulier les chiffres de 0 à 9 et deux, cinq ou six éléments factices, de sorte à permettre respectivement des grilles 3x4 (comme dans l'exemple de la figure 2), 3x5 ou 4x4.

Une autre spécificité des claviers virtuels dédiés à la saisie d'un code est que les éléments sont généralement disposés de manière aléatoire, de façon à perturber un éventuel enregistreur de frappe, contrairement à un clavier virtuel de base de terminal mobile 1 qui présente une organisation fixe prédéterminée (par exemple celle d'un clavier physique azerty comme expliqué), pour que l'utilisateur puisse facilement l'utiliser. Ainsi, l'étape (a) comprend dans un tel cas la disposition aléatoire des éléments du clavier virtuel.

Comme expliqué, les fonctions d'affichage de l'interface graphique utilisateur 13 peuvent être désactivées, c'est ce que l'on appelle le mode « écran noir ». Dans le mode de réalisation dans lequel l'interface graphique utilisateur 13 est un écran tactile, l'écran est tout simplement inactif, la dalle tactile fonctionnant elle normalement. Dans le mode de réalisation dans lequel l'équipement informatique 1 est un ordinateur, l'écran/moniteur est éteint mais le dispositif de pointage et le clavier fonctionnent.

Le mode écran noir peut être soit la conséquence d'une option de sécurité dans lequel l'affichage est interrompu pour éviter les regards de tiers qui eux ne sont pas malvoyants (on peut d'ailleurs éventuellement prévoir que le mode de lecture d'écran active ce mode écran noir), ou encore une simple volonté d'économiser la batterie. En effet, cela ne change absolument rien pour un utilisateur non-voyant.

Dans tous les cas, on comprendra que dans un tel mode écran noir, seule l'exécution de l'affichage n'est pas mise en œuvre, les traitements mis en œuvre par le module de traitement de données 11 (par exemple la disposition aléatoire des éléments du clavier virtuels) et la saisie restant inchangés : bien qu'il ne soit pas visible, le clavier virtuel est toujours « présent » et ses touches sont sélectionnables (de la même manière qu'on peut toujours cliquer avec une souris sur un élément sans que l'écran allumé), bien que l'absence de feedback rende particulièrement difficile l'utilisation d'un mode de commande classique.

A noter que l'étape (a) peut également comprendre, s'il y a affichage du clavier virtuel, l'affichage d'informations générales et/ou de boutons pour la mise en œuvre d'une saisie en mode classique, typiquement un bouton valider (lorsque tout le code a été saisi) et un bouton effacer (pour revenir en arrière). On voit également que des cases peuvent être prévues pour indiquer le nombre d'éléments dans le code, et par exemple à chaque élément sélectionné une étoile est affichée dans la case pour indiquer que la saisie a eu lieu sans pour autant dévoiler l'élément saisi.

### Mode de lecture d'écran

Dans un mode de commande classique, l'utilisateur saisit ledit code en sélectionnant (par exemple en pressant) successivement les touches du clavier virtuel correspondant aux éléments de la séquence constituant ledit code.

Par exemple, si le code est 1234, il est constitué de la séquence de chiffres « 1 », « 2 », « 3 » et « 4 », et l'utilisateur presse donc successivement les touches « 1 », « 2 », « 3 » et « 4 » du clavier virtuel.

Comme expliqué dans l'introduction, cela devient fastidieux dans un mode de lecture d'écran, en particulier si les éléments du clavier sont disposés aléatoirement et incluent des éléments factices.

Le présent procédé propose astucieusement de présenter vocalement le contenu du clavier comme un seul bloc au sein duquel une pluralité d'actions de saisie sont disponibles. En d'autres termes, au lieu d'avoir une touche « 1 », une touche « 2 », etc. dont on connait mal la position, on a une seule touche pouvant être « 1 » ou « 2 », etc. Pour cela, est définie une liste d'éléments possibles dudit clavier virtuel. Un élément de la liste correspond à un des éléments du clavier virtuel. Conformément à l'invention, cette liste est ordonnée pour faciliter sa lecture, selon un ordre logique prédéterminé qui est différent de la disposition aléatoire des éléments sur le clavier virtuel. Dans le cas d'un clavier virtuel alphanumérique, on peut par exemple prévoir que la liste contienne successivement les chiffres de 0 à 9 puis les lettres de A à Z. Suivant les éléments contenus dans le clavier, on pourra faire n'importe quel ordonnancement porteur de logique pour l'utilisateur.

Dans un mode de réalisation particulier, ladite liste d'éléments possibles dudit clavier virtuel comprend tous les éléments du clavier virtuel pouvant faire partie du code, mais pas les éléments ne pouvant pas faire partie du code, tels que les éléments factices. Ainsi, les éventuels éléments factices ne sont pas présentés vocalement et ne gênent plus l'utilisateur.

Cette liste peut être vue comme une liste d'actions possibles liées au clavier virtuel, l'action associée à un élément du clavier étant virtuellement le fait de presser la touche correspondant à cet élément. On définit alors un élément courant de la liste comme l'élément qui sera sélectionné si le « bloc » clavier est sollicité. L'élément courant peut être arbitrairement initialisé comme le premier élément de la liste, ou le dernier élément sélectionné par exemple.

A noter que pour faciliter l'interaction de l'utilisateur, ladite liste (ordonnée) d'éléments possibles dudit clavier virtuel peut comprendre en outre un élément d'effacement, dont la sélection fait revenir à l'élément précédent de la séquence constituant le code (i.e. équivalent au bouton « effacer » que l'on voit sur la figure 2). Ainsi, si l'élément courant est cette action d'effacement, sa sélection supprime la sélection du dernier élément du code, et on revient à l'étape précédente. Si aucun élément n'a encore été saisi à ce stade (i.e. on en est au premier élément du code), la sélection de l'élément d'effacement ne fera rien.

Comme l'on verra plus tard, cela facilite beaucoup la vie de l'utilisateur par rapport aux logiciels de lecture d'écran connus à ce jour s'exécutant dans un mode de saisie classique, dans lesquels l'utilisateur doit effectuer sans cesse des va-et-vient entre une touche d'effacement et le clavier virtuel : il n'a aucune confirmation de l'exécution de l'effacement et pour savoir où il en est dans la saisie de son code il doit se positionner sur les cases marquées d'étoile en bas de son écran, et encore s'il arrive à les voir.

Par ailleurs, la liste peut alternativement ou en complément comprendre un élément de validation, dont la sélection entraîne la fin de la saisie, et la soumission du code obtenu. Cela est particulièrement avantageux dans le cas d'un code dont la longueur peut être variable, i.e. qui ne comprend pas toujours le même nombre d'éléments.

Cette liste peut être prédéfinie, ou générée à la fin de l'étape (a), de façon classique pour un lecteur d'écran : celui-ci va seulement lire d'un coup tout le clavier, et pas seulement les touches les unes après les autres.

Dans un mode de réalisation particulier, l'étape (a) comprend ainsi également la description vocale sur la sortie audio 14 de ladite liste d'éléments possibles dudit clavier virtuel, i.e. tous les éléments sont lus.

A noter que cette lecture peut suivre celle d'instructions sur la présente utilisation du clavier virtuel pour expliquer par exemple à l'utilisateur de brancher un casque sur la sortie audio 14 pour garder la confidentialité, et ensuite comment il va pouvoir sélectionner chaque élément du code.

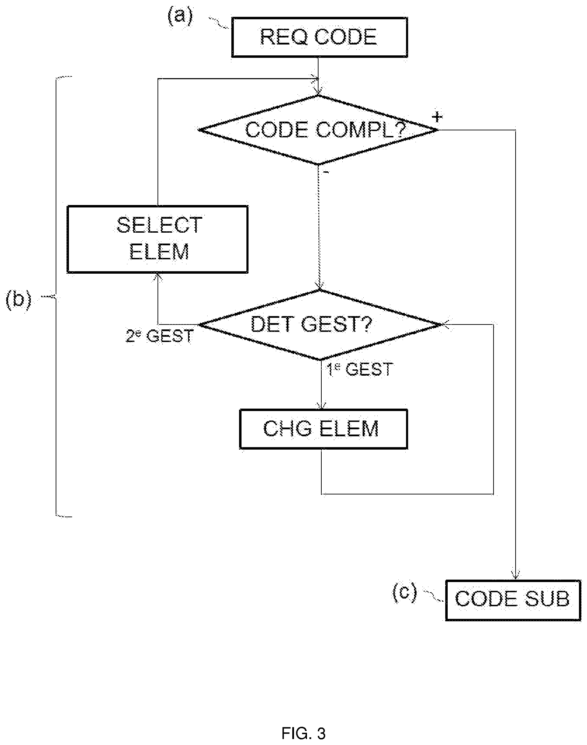

En référence à la **figure 3****,** dans une étape (b), l'utilisateur utilise la liste pour sélectionner chaque élément de la séquence, de façon itérative : les éléments de la séquence sont sélectionnés et validés un à un, jusqu'à ce que le code soit complet, i.e. que le dernier élément ait été sélectionné et validé et éventuellement qu'une validation de l'utilisateur du code personnel ait eu lieu (voir plus loin). On comprend donc que l'étape (b) est mise en œuvre au moins autant de fois qu'il y a d'éléments dans le code (dans un exemple décrit ultérieurement, le nombre d'éléments dans le code plus deux fois le nombre d'effacement d'éléments).

L'idée est de disposer de deux types de geste pouvant être effectués sur l'interface graphique utilisateur 13, l'un (dit geste de premier type) permettant de changer d'élément courant, i.e. de faire défiler la liste, en vue d'une sélection et l'autre (dit geste de deuxième type) permettant de valider l'élément courant comme élément suivant de la séquence. A noter qu'il peut y avoir en complément un troisième type de geste et/ou un quatrième type de geste dédiés respectivement à la validation et à l'effacement (s'il y a des types de geste définis pour ces actions, il n'est pas obligatoire que la liste comprenne des éléments correspondants, et le cas échéant la liste peut exclusivement contenir des éléments du clavier virtuel). Ces types de geste n'excluent pas la possibilité d'encore d'autres types tels qu'un type de geste par défaut du mode de lecture d'écran pour lire une zone, ou un type de geste pour annuler toute la saisie et sortir.

Par geste, on entend un mouvement caractéristique effectué par l'utilisateur selon la nature de l'interface graphique utilisateur 13.

Si celle-ci est un écran tactile, lesdits premier et deuxième types de geste sont des gestes de toucher, avec le doigt ou un stylet par exemple. Classiquement, le geste « par défaut » du mode de lecture d'écran pour lire une zone peut être un toucher simple, i.e. bref et sans mouvement, et les premier et deuxième types de geste peuvent être des touchers différents tels qu'un toucher glissé pour le premier type de geste (en anglais « swipe », c'est-à-dire un déplacement pendant la durée du toucher), et un toucher double ou un toucher long (pendant une durée supérieure à un seuil donné permettant de différencier un toucher simple d'un toucher long) pour le deuxième type de geste.

Si l'interface graphique utilisateur 13 est une autre technologie par exemple une combinaison écran/dispositif de pointage, les gestes peuvent être des déplacements du pointeur ou le pressage de certains boutons. Classiquement, le geste « par défaut » du mode de lecture d'écran pour lire une zone peut être un clic gauche, et les premier et deuxième types de geste peuvent être d'autres actions telles qu'une rotation d'une molette pour le premier type (en anglais « scrolling »), et un toucher clic ou un clic gauche pour le deuxième type.

On note qu'il peut y avoir plusieurs gestes de premier type, correspondant par exemple à deux sens de parcours de la liste (i.e. deux gestes différents). Par exemple, un toucher glissé vers le haut (« swipe up ») peut faire défiler la liste dans un sens tel que le sens croissant si elle est ordonnée (l'élément courant passe de « 1 », à « 2 », à « 3 », etc.), et un toucher glissé vers le bas (« swipe down ») peut faire défiler la liste dans l'autre sens tel que le sens décroissant si elle est ordonnée (l'élément courant passe de « 3 », à « 2 », à « 1 », etc.). La même chose est possible avec la molette par exemple. En ce qui concerne les troisième et quatrième types de geste, on peut par exemple prendre un toucher glissé avec une première forme pour l'effacement et un toucher glissé avec une deuxième forme pour la validation.

On note que la liste peut boucler : si l'élément courant est le dernier élément et que l'on continue à faire le premier type de geste, on revient au premier élément de la liste (par exemple un swipe up fait passer de « 9 », à « effacement », à « 0 » à « a », etc.).

Dans un mode de réalisation particulier, chaque détection d'un premier ou deuxième type de geste peut être accompagnée de la description vocale sur la sortie audio 14 de l'action mise en œuvre suite à cette détection.

En d'autres termes, un changement d'élément courant de la liste peut s'accompagner d'une description vocale sur la sortie audio 14 du nouvel élément courant (typiquement, sa valeur est simplement prononcée), la sélection de l'élément courant peut s'accompagner d'une description de cette sélection (si par exemple on vient de sélectionner « 8 » comme 3^{e} élément du code, alors peut être prononcé « 8 est le 3^{e} chiffre du code, encore un chiffre à sélectionner », ou si l'on vient sélectionner l'élément d'effacement, alors peut être prononcé « 3^{e} chiffre du code effacé, merci de sélectionner à nouveau le 3^{e} chiffre »).

Une fois que l'ensemble des éléments du code a été sélectionné, le code est complet, et une étape (c) finale de soumission du code peut être mise en œuvre, i.e. le code reconstitué est utilisé, par exemple transmis au serveur distant 2 pour authentification de l'utilisateur. Cette soumission peut être faite de manière classique, en particulier seulement les positions/références des touches du clavier virtuel correspondant aux éléments du code peuvent être transmises, de sorte à garder la sécurité supplémentaire offerte par un clavier virtuel en particulier aléatoirisé.

A noter que l'étape (c) peut être directement mise en œuvre dès que le nombre attendu d'éléments du code a été saisi, ou précédée d'une validation de l'utilisateur : en effet, il a pu se tromper sur la sélection du dernier élément. Pour cette validation :
- soit il fait le geste dédié (par exemple une deuxième forme comme expliqué avant)
- soit il sélectionne l'élément de validation correspondant dans la liste,
- soit encore on lui propose vocalement une liste dédiée à la validation et utilisable de la même façon que la liste de l'étape (b), mais ne contenant pas d'élément du clavier virtuel.

Une telle liste de validation contient par exemple un élément d'effacement, un élément de validation, et éventuellement un élément pour vocaliser tout le code. La navigation dans cette liste peut être exactement de la même façon qu'à l'étape (b), avec un premier type de geste pour changer d'élément courant et un deuxième type de geste pour valider l'élément courant.

Encore alternativement, la validation peut être décidée au bout d'un certain temps : si par exemple pendant 10 secondes l'utilisateur n'a pas effacé le dernier élément, alors on considère qu'il est d'accord avec la saisie et elle est validée.

La présente invention n'est sinon limitée à aucune façon de valider le code.

Dans tous les cas, tout le code peut être automatiquement vocalisé dès que le dernier élément est sélectionné, de sorte à faciliter la vérification.

### Exemple

Supposons par exemple un code à quatre chiffres 8547.

Dans l'étape (a), le clavier virtuel tel que représenté par la figure 2 est affiché, et une description vocale de ce clavier virtuel est mise en œuvre, par exemple après que les consignes ont été prononcées (numéro d'identifiant de l'utilisateur, nombre d'élément du code, explication de la liste, des différents gestes, etc.).

L'utilisateur sait à présent que la liste contient onze éléments, dont les chiffres de « 0 » à « 9 » ordonnés et l'élément d'effacement.

Dans une première occurrence de l'étape (b), il fait défiler la liste de « 0 » à « 8 » par une série de gestes de premier type (swipe vers le haut), à chaque fois le chiffre correspondant est vocalisé, puis il sélectionne l'élément « 8 » par le geste de deuxième type (double toucher). Est alors prononcé « 8 est le premier chiffre, maintenant sélectionnez le deuxième chiffre ».

Dans une deuxième occurrence de l'étape (b), il fait défiler la liste de « 8 » à « 5 » par une série de gestes de premier type (swipe vers le bas cette fois), à chaque fois le chiffre correspondant est vocalisé, puis il sélectionne l'élément « 5 » par le geste de deuxième type (double toucher). Est alors prononcé « 5 est le deuxième chiffre, maintenant sélectionnez le troisième chiffre ».

Dans une troisième occurrence de l'étape (b), il fait défiler la liste de « 5 » à « 3 » par une série de gestes de premier type (swipe vers le bas), à chaque fois le chiffre correspondant est vocalisé, puis il sélectionne l'élément « 3 » par le geste de deuxième type (double toucher). Est alors prononcé « 3 est le troisième chiffre, maintenant sélectionnez le quatrième et dernier chiffre ».

Par exemple, l'utilisateur constate qu'il a fait une erreur, il est descendu une fois de trop puisqu'il aurait dû choisir 4 au lieu de 3. Ainsi, dans une quatrième occurrence de l'étape (b), il fait défiler la liste de « 3 » à l'élément d'effacement par une série de gestes de premier type (swipe vers le bas), à chaque fois le chiffre correspondant est vocalisé (et il est prononcé « effacer le dernier chiffre » lorsqu'il atteint l'élément d'effacement), puis il sélectionne l'élément d'effacement par le geste de deuxième type (double toucher). Est alors prononcé « le troisième chiffre est effacé, maintenant sélectionnez à nouveau le troisième chiffre ». On voit donc que cet effacement ne perturbe pas du tout la saisie, puisque l'utilisateur sait toujours où il en est.

Dans une cinquième occurrence de l'étape (b), il fait défiler la liste de l'élément d'effacement à « 4 » par une série de gestes de premier type (swipe vers haut), à chaque fois le chiffre correspondant est vocalisé, puis il sélectionne l'élément « 4 » par le geste de deuxième type (double toucher). Est alors prononcé « 4 est le troisième chiffre, maintenant sélectionnez le quatrième et dernier chiffre ».

Dans une sixième occurrence de l'étape (b), il fait défiler la liste de « 4 » à « 7 » par une série de gestes de premier type (swipe vers le haut), à chaque fois le chiffre correspondant est vocalisé, puis il sélectionne l'élément « 7 » par le geste de deuxième type (double toucher). Est alors prononcé « 7 est le quatrième et dernier chiffre, le code saisi est 8547, souhaitez-vous le valider ? ».

Dans cet exemple, on constate qu'on a quatre occurrences de l'étape (b) correspondant aux quatre chiffres du code, plus deux occurrences de l'étape (b) correspondant à un effacement de chiffre (effacement + resélection).

L'utilisateur fait enfin le geste de troisième type (swipe vers la droite) pour valider, et dans l'étape (c) le code 8457 est transmis au serveur 2 pour authentification.

### Serveur de sécurité et équipement informatique

Selon un deuxième aspect, l'invention concerne l'équipement informatique 1 pour la mise en œuvre du procédé selon le premier aspect.

Comme expliqué, cet équipement informatique 1 comprend un module de traitement de données 11 et une interface utilisateur graphique 13. Il s'agit par exemple d'un écran tactile. L'équipement informatique 1 peut en outre comprendre une sortie audio 14, un module de stockage de données 12, un module de communication, configuré pour être connecté à un serveur distant 2, etc.

Le module de traitement de données 11 est ainsi configuré pour :
- Requérir la saisie par l'utilisateur d'un code sur l'interface graphique utilisateur 13 par l'intermédiaire d'un clavier virtuel, ledit code étant constitué d'une séquence d'éléments dudit clavier virtuel (typiquement tous les éléments du clavier pouvant faire partie du code et les éventuels éléments factices, ainsi que possiblement un élément d'effacement et/ou un élément de validation) ;
- Pour un élément de la séquence constituant ledit code :
   ∘ Soit détecter un premier geste effectué par l'utilisateur sur l'interface graphique utilisateur 13, et alors changer un élément courant d'une liste d'éléments possibles dudit clavier virtuel ;
   ∘ Soit détecter un deuxième geste, différent du premier geste, effectué par l'utilisateur sur l'interface utilisateur 13, et alors sélectionner l'élément courant comme élément de ladite séquence constituant ledit code (si ledit élément est l'élément d'effacement, revenir à la sélection de l'élément précédent de la séquence constituant le code) ;
- Le cas échéant, après que chaque élément du code a été sélectionné, soumettre le code.

Plus précisément, le clavier virtuel comprend des éléments disposés de manière aléatoire.

Plus précisément, un élément de la liste associée au clavier virtuel correspond à un des éléments du clavier virtuel.

### Produit programme d'ordinateur

Selon un troisième et un quatrième aspects, l'invention concerne un produit programme d'ordinateur comprenant des instructions de code pour l'exécution (en particulier sur le module de traitement de données 11 de l'équipement informatique 1) d'un procédé selon le premier aspect de l'invention de commande d'un équipement informatique 1, ainsi que des moyens de stockage lisibles par un équipement informatique (le module de stockage de données 12 de l'équipement informatique 1) sur lequel on trouve ce produit programme d'ordinateur.

## Revendications

1. Procédé de commande d'un équipement informatique (1) comprenant une interface utilisateur graphique (13), le procédé étant **caractérisé en ce qu'**il comprend la mise en œuvre d'étapes de :
(a) Requête de saisie par l'utilisateur d'un code sur l'interface graphique utilisateur (13) par l'intermédiaire d'un clavier virtuel, comprenant des éléments disposés de manière aléatoire, ledit code étant constitué d'une séquence d'éléments dudit clavier virtuel,
(b) Pour un élément de la séquence constituant ledit code :
- Si détection d'un geste de premier type effectué par l'utilisateur sur l'interface graphique utilisateur (13), changement d'un élément courant d'une liste d'éléments possibles associée au clavier virtuel correspondant respectivement à un des éléments du clavier virtuel, ladite liste étant ordonnée selon un ordre logique prédéterminé qui est différent de la disposition aléatoire des éléments sur le clavier virtuel ;
- Si détection d'un geste de deuxième type, différent du premier type de geste, effectué par l'utilisateur sur l'interface utilisateur (13), validation de l'élément courant comme élément de ladite séquence constituant ledit code.

2. Procédé selon la revendication 1, dans lequel ladite interface graphique (13) est un écran tactile, lesdits premier et deuxième types de gestes étant des gestes de toucher.

3. Procédé selon la revendication 2, dans lequel le premier type de geste est un toucher glissé et le deuxième type de geste est un toucher double.

4. Procédé selon l'une des revendications 1 à 3, dans lequel l'équipement informatique (1) comprenant en outre une sortie audio (14), l'étape (b) comprend la description vocale sur la sortie audio (14) d'une action mise en œuvre suite à la détection d'un geste de premier ou deuxième type.

5. Procédé selon la revendication 4, dans lequel l'étape (a) comprend la description vocale sur la sortie audio (14) de ladite liste d'éléments possibles dudit clavier virtuel.

6. Procédé selon l'une des revendications 1 à 5, dans lequel le clavier virtuel comprend au moins un élément ne pouvant pas faire partie du code, ladite liste d'éléments possibles dudit clavier virtuel comprenant tous les éléments du clavier virtuel pouvant faire partie du code.

7. Procédé selon l'une des revendications 1 à 6, dans lequel ladite liste d'éléments possibles dudit clavier virtuel comprend en outre un élément d'effacement, dont la validation fait revenir à l'élément précédent de la séquence constituant le code.

8. Procédé selon l'une des revendications 1 à 7, comprenant en outre, après que chaque élément de la séquence constituant le code a été sélectionné, une étape (c) de soumission du code.

9. Equipement informatique (1) comprenant un module de traitement de données (11) et une interface utilisateur graphique (13), **caractérisé en ce que** le module de traitement de données (11) est configuré pour :
- Requérir la saisie par l'utilisateur d'un code sur l'interface graphique utilisateur (13) par l'intermédiaire d'un clavier virtuel, comprenant des éléments disposés de manière aléatoire, ledit code étant constitué d'une séquence d'éléments dudit clavier virtuel ;
- Pour un élément de la séquence constituant ledit code :
∘ Soit détecter un geste d'un premier type effectué par l'utilisateur sur l'interface graphique utilisateur (13), et alors changer un élément courant d'une liste d'éléments possibles dudit clavier virtuel, correspondant respectivement à un des éléments du clavier virtuel, ladite liste étant ordonnée selon un ordre logique prédéterminé qui est différent de la disposition aléatoire des éléments sur le clavier virtuel ;
∘ Soit détecter un geste d'un deuxième type, différent du premier type de gest, effectué par l'utilisateur sur l'interface utilisateur (13), et alors valider l'élément courant comme élément de ladite séquence constituant ledit code.

10. Produit programme d'ordinateur comprenant des instructions de code pour l'exécution d'un procédé selon l'une des revendications 1 à 8 de commande d'un équipement informatique (1), lorsque ledit programme est exécuté par un ordinateur.

11. Moyen de stockage lisible par un équipement informatique sur lequel est enregistré le produit programme d'ordinateur selon la revendication 10.

## Patentansprüche

1. Verfahren zur Steuerung einer Rechnervorrichtung (1), die eine grafische Benutzeroberfläche (13) umfasst, wobei das Verfahren **dadurch gekennzeichnet ist, dass** es die Ausführung der folgenden Schritte umfasst:
(a) die Aufforderung an den Benutzer, mittels einer virtuellen Tastatur auf der grafischen Benutzeroberfläche (13) einen Code einzugeben, der zufällig angeordnete Elemente umfasst, wobei der Code aus einer Abfolge von Elementen der virtuellen Tastatur besteht,
(b) für ein Element der Abfolge, aus welcher der Code besteht:
- wenn eine vom Benutzer auf der grafischen Benutzerschnittstelle (13) ausgeführte Geste eines ersten Typs erfasst wird, der Wechsel eines aktuellen Elements aus einer Liste von der virtuellen Tastatur zugeordneten möglichen Elementen, die jeweils einem der Elemente der virtuellen Tastatur entsprechen, wobei die Liste gemäß einer vorbestimmten logischen Ordnung geordnet ist, die sich von der zufälligen Anordnung der Elemente auf der virtuellen Tastatur unterscheidet;
- wenn eine vom Benutzer auf der grafischen Benutzerschnittstelle (13) ausgeführte Geste eines vom ersten Gestentyp verschiedenen zweiten Typs erfasst wird, die Bestätigung des aktuellen Elements als Element der Abfolge, aus welcher der Code besteht.

2. Verfahren nach Anspruch 1, wobei die grafische Schnittstelle (13) ein Touchscreen ist, wobei der erste und der zweite Gestentyp Berührungsgesten sind.

3. Verfahren nach Anspruch 2, wobei der erste Gestentyp eine Wischberührung und der zweite Gestentyp eine Doppelberührung ist.

4. Verfahren nach einem der Ansprüche 1 bis 3, wobei die Rechnervorrichtung (1) außerdem einen Audioausgang (14) umfasst, wobei Schritt (b) die über den Audioausgang (14) gesprochene Beschreibung einer Aktion umfasst, die nach der Erfassung einer Geste des ersten oder des zweiten Typs ausgeführt wird.

5. Verfahren nach Anspruch 4, wobei Schritt (a) die über den Audioausgang (14) gesprochene Beschreibung der Liste möglicher Elemente der virtuellen Tastatur umfasst.

6. Verfahren nach einem der Ansprüche 1 bis 5, wobei die virtuelle Tastatur mindestens ein Element umfasst, das keinen Teil des Codes darstellen kann, wobei die Liste möglicher Elemente der virtuellen Tastatur alle Elemente der virtuellen Tastatur umfasst, die Teil des Codes darstellen können.

7. Verfahren nach einem der Ansprüche 1 bis 6, wobei die Liste möglicher Elemente der virtuellen Tastatur außerdem ein Löschelement umfasst, dessen Bestätigung ein Zurückkehren zum vorhergehenden Element der den Code darstellenden Abfolge bewirkt.

8. Verfahren nach einem der Ansprüche 1 bis 7, das außerdem nach der Auswahl eines jeden Elements der den Code darstellenden Abfolge einen Schritt (c) der Übermittlung des Codes umfasst.

9. Rechnervorrichtung (1), die ein Datenverarbeitungsmodul (11) und eine grafische Benutzeroberfläche (13) umfasst, **dadurch gekennzeichnet, dass** das Datenverarbeitungsmodul (11) für Folgendes konfiguriert ist:
- die Aufforderung an den Benutzer, mittels einer virtuellen Tastatur auf der grafischen Benutzeroberfläche (13) einen Code einzugeben, der zufällig angeordnete Elemente umfasst, wobei der Code aus einer Abfolge von Elementen der virtuellen Tastatur besteht;
- für ein Element der Abfolge, aus welcher der Code besteht:
∘ entweder das Erfassen einer vom Benutzer auf der grafischen Benutzerschnittstelle (13) ausgeführten Geste eines ersten Typs und dann der Wechsel eines aktuellen Elements aus einer Liste von möglichen Elementen der virtuellen Tastatur, die jeweils einem der Elemente der virtuellen Tastatur entsprechen, wobei die Liste gemäß einer vorbestimmten logischen Ordnung geordnet ist, die sich von der zufälligen Anordnung der Elemente auf der virtuellen Tastatur unterscheidet;
∘ oder das Erfassen einer vom Benutzer auf der grafischen Benutzerschnittstelle (13) ausgeführte Geste eines vom ersten Gestentyp verschiedenen zweiten Typs und dann das Bestätigen des aktuellen Elements als Element der Abfolge, aus welcher der Code besteht.

10. Computerprogrammprodukt, das Codeanweisungen zur Ausführung eines Verfahrens nach einem der Ansprüche 1 bis 8 zur Steuerung einer Rechnervorrichtung (1) umfasst, wenn das Programm durch einen Computer ausgeführt wird.

11. Von einer Rechnervorrichtung lesbares Speichermedium, auf dem das Computerprogrammprodukt nach Anspruch 10 gespeichert ist.

## Claims

1. Method for controlling a computer device (1) comprising a graphical user interface (13), the method being **characterized in that** it comprises implementing steps of:
(a) requesting that the user enter a code on the graphical user interface (13) by way of a virtual keypad, comprising elements arranged in a random manner, said code consisting of a sequence of elements of said virtual keypad,
(b) for an element of the sequence forming said code:
- if a gesture of a first type performed by the user on the graphical user interface (13) is detected, changing a current element of a list of possible elements associated with the virtual keypad corresponding respectively to one of the elements of the virtual keypad, said list being ordered in a predetermined logic order different from the random arrangement of the elements on the virtual keypad;
- if a gesture of a second type, different from the first type of gesture, performed by the user on the user interface (13) is detected, confirming the current element as the element of said sequence forming said code.

2. Method according to Claim 1, wherein said graphical interface (13) is a touchscreen, said first and second types of gesture being tapping gestures.

3. Method according to Claim 2, wherein the first type of gesture is a swipe and the second type of gesture is a double tap.

4. Method according to one of Claims 1 to 3, wherein, with the computer device (1) furthermore comprising an audio output (14), step (b) comprises vocally describing, on the audio output (14), an action implemented following the detection of a gesture of a first or second type.

5. Method according to Claim 4, wherein step (a) comprises vocally describing, on the audio output (14), said list of possible elements of said virtual keypad.

6. Method according to one of Claims 1 to 5, wherein the virtual keypad comprises at least one element that cannot form part of the code, said list of possible elements of said virtual keypad comprising all of the elements of the virtual keypad that are able to form part of the code.

7. Method according to one of Claims 1 to 6, wherein said list of possible elements of said virtual keypad furthermore comprises a delete element, confirmation of which causes a return to the previous element of the sequence forming the code.

8. Method according to one of Claims 1 to 7, furthermore comprising, after each element of the sequence forming the code has been selected, a step (c) of submitting the code.

9. Computer device (1) comprising a data processing module (11) and a graphical user interface (13), **characterized in that** the data processing module (11) is configured so as to:
- request that the user enter a code on the graphical user interface (13) by way of a virtual keypad, comprising elements arranged in a random manner, said code consisting of a sequence of elements of said virtual keypad;
- for an element of the sequence forming said code:
∘ either detect a gesture of a first type performed by the user on the graphical user interface (13), and then change a current element of a list of possible elements of said virtual keypad, corresponding respectively to one of the elements of the virtual keypad, said list being ordered in a predetermined logic order different from the random arrangement of the elements on the virtual keypad;
∘ or detect a gesture of a second type, different from the first type of gesture, performed by the user on the user interface (13), and then confirm the current element as the element of said sequence forming said code.

10. Computer program product comprising code instructions for executing a method according to one of Claims 1 to 8 for controlling a computer device (1) when said program is executed by a computer.

11. Storage medium able to be read by a computer device and on which the computer program product according to Claim 10 is recorded.
